# EUROPEAN PATENT APPLICATION

(11) **EP 2 908 482 A1**
(43) Date of publication of application: **19.08.2015**
(21) Application number: 13846865.7
(22) Date of filing: 09.10.2013
(51) Int. Cl.: H04L 12/70

(54) **INFORMATION PROCESSING DEVICE, INFORMATION PROCESSING METHOD, AND PROGRAM**

(30) Priority: 15.10.2012 JP 2012227661
(71) Applicant: Mitsubishi Electric Corporation, Tokyo 100-8310 (JP)
(72) Inventor: UOZUMI, Mitsunari, Tokyo 100-8310 (JP)
(74) Representative: Pfenning, Meinig & Partner GbR
(86) International application number: PCT/JP2013/077506
(87) International publication number: WO 2014/061529

(57) **Abstract**

A microburst detection device 100 acquires from a database 250, collected information collected from equipment 201 having a buffer 221 and for accumulating in the buffer 221 a packet received. The collected information indicates the number of times the equipment 201 has requested a packet transmission source to halt packet transmission due to a shortage of a free space of the buffer 221. The microburst detection device 100 also determines whether or not burst traffic to the equipment 201 has occurred, based on the number of times of packet transmission halt request indicated by the collected information.

## Description

### Technical Field

The present invention relates to a technique for determining whether or not burst traffic has occurred.

### Background Art

A TCP connection failure, an unstable response time, an interrupted image or sound, and the like may occur even though there is nothing wrong with the traffic amount per second acquired by monitoring the network traffic.

These phenomena are considered to be caused by burst traffic (to be referred to as microburst hereinafter) that occurs when packets are sent intensively within a microtime.

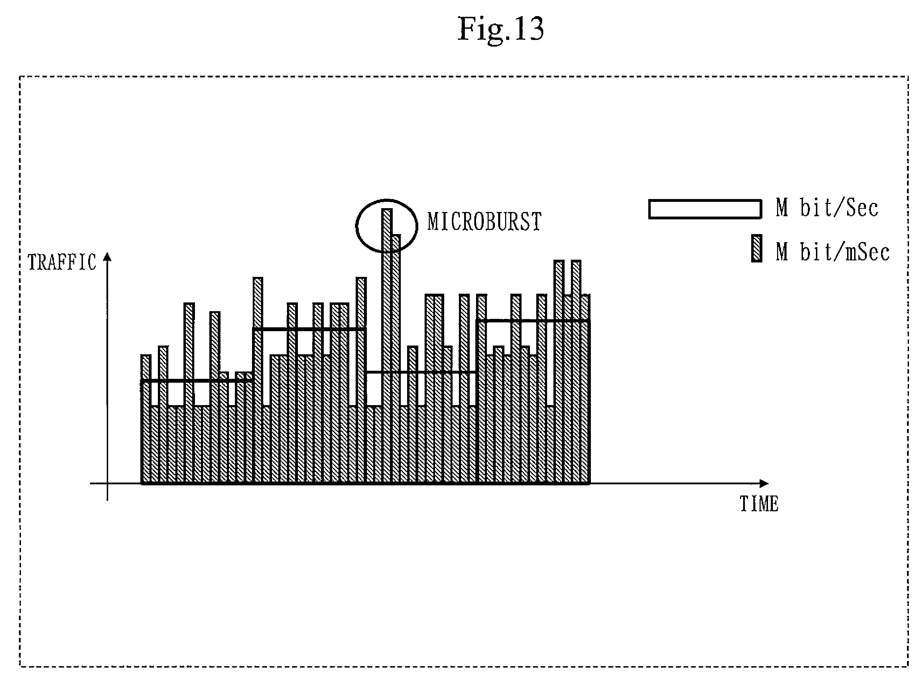

As illustrated in Fig. 13, the traffic amount changes steadily when seen in seconds. When seen in milliseconds, however, there may be microburst in which the traffic amount increases abruptly.

In conventional traffic monitoring, an average traffic is monitored by observing a MIB (Management Information Base) such as a counter in a network device or an average flow rate (bit/Sec) (for example, Patent Literature 1).

According to the Network Time Machine by FLUKE networks, the captured packets are totaled by the millisecond, enabling detection of microburst occurring within a microtime (for example, Non-Patent Literature 1).

### Citation List

### Patent Literature

Patent Literature 1: JP 2005-286684

### Non-Patent Literature

Non-Patent Literature 1: Network Time Machine http:// jp.flukenetworks.com/enterprise-network/network-monitoring/Network-Time-Machine

### Summary of Invention

### Technical Problem

Packets have random properties and accordingly arrive at non-uniform intervals. The shorter the packet arrival interval, the higher the microburst occurrence probability.

Therefore, there is a problem that with conventional traffic monitoring using a conventional average value per second, an event of packet arrival at short interval cannot be captured.

There is also a problem that with a method of totaling the capture data at a time interval shorter than a second, a plurality of probes for capturing the packets need be set in advance.

The present invention mainly aims at solving these problems, and has as its major object to detect burst traffic occurring in a microtime without using probes for capturing the packets.

### Solution to Problem

An information processing device according to the present invention includes:
an information input part that receives collected information collected from a communication device having a buffer and for accumulating in the buffer a packet received, the collected information indicating at least either one of the number of times of packet transmission halt request and the number of discarded packets, the number of times of packet transmission halt request being the number of times the communication device has requested a packet transmission source to halt packet transmission due to a shortage of a free space of the buffer, the number of discarded packets being the number of packets discarded by the communication device due to a shortage of the free space of the buffer; and
a burst traffic determination part that determines whether or not burst traffic to the communication device has occurred, based on at least either one of the number of times of packet transmission halt request and the number of discarded packets, each of which numbers being indicated by the collected information.

### Advantageous Effects of Invention

According to the present invention, collected information indicating at least either one of the number of times a communication device has requested a packet transmission source to halt packet transmission due to a shortage of the free space of a buffer, and the number of packets discarded by the communication device due to the shortage of the free space of the buffer, is received. Whether or not burst traffic to the communication device has occurred is determined based on at least either one of the number of times of packet transmission halt request and the number of discarded packets, each of which numbers being indicated by the collected information.

As a result, burst traffic occurring in a microtime can be detected without using probes for capturing the packets.

### Brief Description of Drawings

Fig. 1 illustrates equipments and a microburst detection device according to Embodiment 1.
Fig. 2 illustrates a configuration example of the microburst detection device according to Embodiment 1.
Fig. 3 is a flowchart illustrating an operation example of the microburst detection device according to Embodiment 1.
Fig. 4 illustrates equipments and a microburst detection device according to Embodiment 2.
Fig. 5 is a flowchart illustrating an operation example of the microburst detection device according to Embodiment 2.
Fig. 6 illustrates a connection example of equipments according to Embodiment 3.
Fig. 7 illustrates a configuration example of a microburst detection device according to Embodiment 3.
Fig. 8 illustrates an example of an adjacency matrix according to Embodiment 3.
Fig. 9 illustrates an example of an occurring equipment matrix according to Embodiment 3.
Fig. 10 illustrates an example of an occurring equipment matrix according to Embodiment 4.
Fig. 11 illustrates an example of an occurring route estimation matrix according to Embodiment 4.
Fig. 12 illustrates a hardware configuration example of the microburst detection device according to Embodiments 1 to 4.
Fig. 13 explains microburst.

### Description of Embodiments

### Embodiment 1.

In this and following embodiments, a configuration will be described that detects microburst using conventional network monitoring by, for example, SNMP (Simple Network Management Protocol).

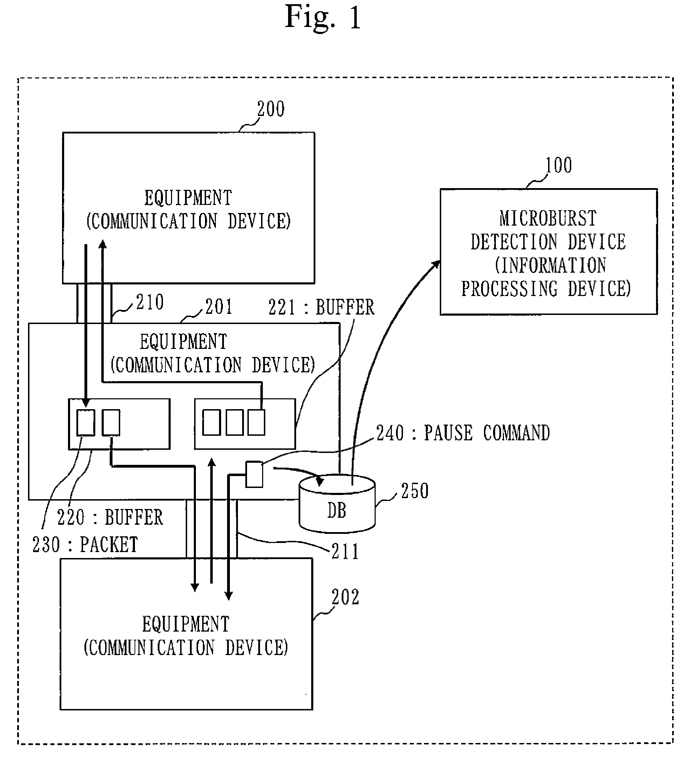

Fig. 1 illustrates a microburst detection device 100 according to Embodiment 1, and equipments as the microburst (burst traffic) detection target of the microburst detection device 100.

Referring to Fig. 1, equipment 200, equipment 201, and equipment 202 are each equipment such as a switch or router which is used in, for example, a network system.

The equipment 200, the equipment 201, and the equipment 202 are each an example of a communication device.

Although Fig. 1 illustrates only three of the equipment 200, equipment 201, and equipment 202, the number of equipments is not limited to three.

A cable 210 connects the equipment 200 and the equipment 201 and is, for example, a LAN (Local Area Network) cable.

A cable 211 connects the the equipment 201 and the equipment 202 and is, for example, a LAN cable.

A buffer 220 is a storage area that accumulates packets 230 received from the equipment 200 via the cable 210.

The packets 230 accumulated in the buffer 220 are transmitted to the equipment 202.

A buffer 221 is a storage area that accumulates the packets 230 received from the equipment 202 via the cable 211.

The packets 230 accumulated in the buffer 221 are transmitted to the equipment 200.

Although Fig. 1 illustrates only the buffer 220 and buffer 221 of the equipment 201, buffers equivalent to the buffer 220 and buffer 221 are provided also to each of the equipment 200 and the equipment 202.

A PAUSE command 240 is a transmission halt request transmitted from the equipment 201 to a packet transmission source (the equipment 200 or the equipment 202) when the buffer 220 or buffer 221 is short of the free space.

Fig. 1 illustrates only the PAUSE command 240 that is transmitted from the equipment 201 to the equipment 202 due to the shortage of the free space of the buffer 221. The PAUSE command 240 is also transmitted from the equipment 201 to the equipment 200 when the buffer 220 is short of the free space.

With the equipment 200 and the equipment 202 as well, they each transmit the the PAUSE command 240 to the packet transmission source when they run short of the buffer free space.

A database 250 is a database such as a MIB that records the number of times the PAUSE command 240 has been transmitted.

The database 250 collects from the respective equipments information indicating the numbers of transmission times of the PAUSE command 240 and accumulates the collected information.

In Fig. 1, the number of times the equipment 201 has transmitted the PAUSE command 240 is recorded in the database 250. In the same manner, the number of times the equipment 200 has transmitted the PAUSE command 240 and the number of times the equipment 202 has transmitted the PAUSE command 240 are also recorded in the database 250.

The microburst detection device 100 receives from the database 250 the collected information on the number of transmission times of the PAUSE command 240, and analyzes the number of transmission times of the PAUSE command 240 indicated in the collected information, to determine whether or not microburst has occurred in the traffic to each equipment.

The microburst detection device 100 is an example of an information processing device.

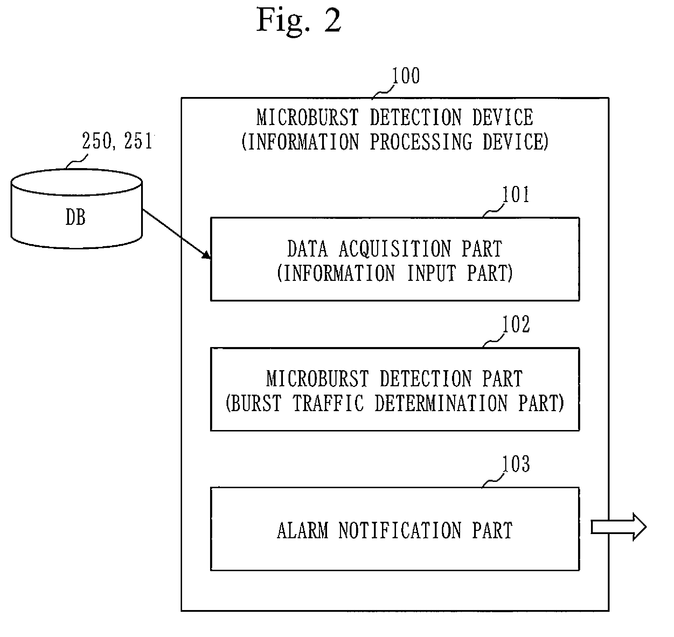

Fig. 2 illustrates a configuration example of the microburst detection device 100 according to this embodiment.

Referring to Fig. 2, a data acquisition part 101 receives the collected information on the number of transmission times of the PAUSE command 240 from the database 250 by SNMP or the like.

The data acquisition part 101 is an example of an information input part.

A microburst detection part 102 detects occurrence of microburst in each equipment based on the number of transmission times of the PAUSE command 240, that is, the number of times each equipment has requested a packet transmission source to halt packet transmission.

More specifically, the microburst detection part 102 calculates the number of transmission times of the PAUSE command 240 per unit time from the number of transmission times (number of times of packet transmission halt request) of the PAUSE command 240 within a predetermined time, indicated by the collected information, and compares the calculated number of transmission times of the PAUSE command 240 per unit time with a predetermined threshold. If the number of transmission times of the PAUSE command 240 per unit time exceeds the threshold, it is determined that microburst (burst traffic) has occurred in corresponding equipment.

The microburst detection part 102 is an example of a burst traffic determining part.

When the microburst detection part 102 detects an occurrence of microburst, an alarm notification part 103 outputs to the outside an alarm message alarming a microburst occurrence.

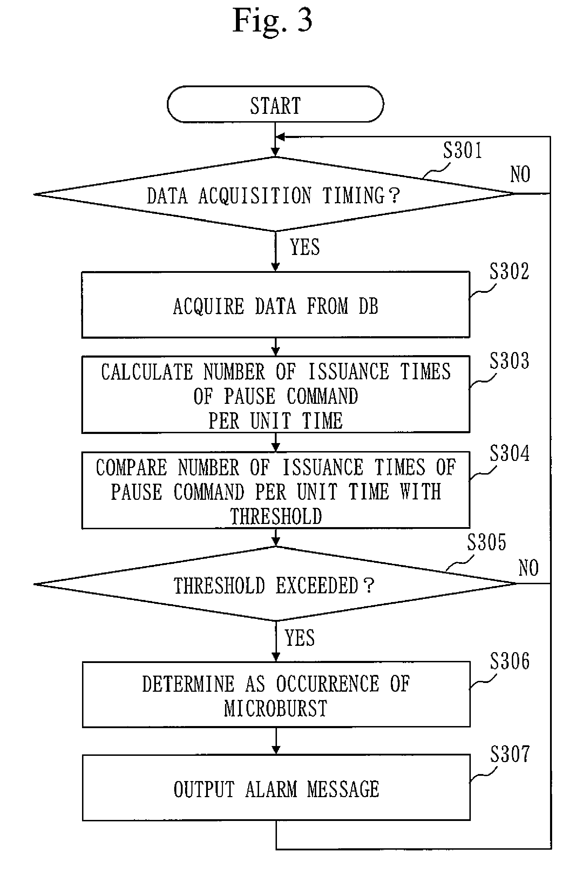

An operation according to this embodiment will be described with reference to the flowchart of Fig. 3.

Packets transmitted from the equipment 200 to the equipment 201 are temporarily accumulated in the buffer 220 of the equipment 201.

The packets accumulated in the buffer 220 are sequentially sent to the equipment 202 via the cable 211 in accordance with the FIFO (First In First Out) method.

Similarly, the packets transmitted from the equipment 202 to the equipment 201 are temporarily accumulated in the buffer 221 of the equipment 201. The packets accumulated in the buffer 221 are sequentially sent to the equipment 200 via the cable 210 in accordance with the FIFO method.

For example, at the time the equipment 202 has transmitted a packet, if the buffer 221 of the equipment 201 is running short of the free space, the equipment 201 sends the PAUSE command 240 to the equipment 202.

The number of transmission times of the PAUSE command 240 is recorded in the database 250.

The data acquisition part 101 of the microburst detection device 100 regularly acquires the collected information of the database 250 which indicates the number of sending times of the PAUSE command 240 (S301, S302).

This acquisition is accomplished by GET of SNMP or the like.

Then, the microburst detection part 102 calculates (S303) the number of issuance times of the PAUSE command 240 per unit time from the collected information acquired in S302.

More specifically, the microburst detection part 102 divides, by an elapsed time, the difference between the value of the number of issuance times of the PAUSE command 240 acquired this time and the value of the number of issuance times of the PAUSE command 240 acquired in the last cycle, thereby obtaining the number of issuance times of the PAUSE command per unit time.

The elapsed time (the cycle of the data acquisition timing in S301) may be 10 seconds, 30 seconds, 1 minute, 5 minutes, or the like.

The unit time may be 1 second, 1 millisecond, or the like.

Then, the microburst detection part 102 compares the number of issuance times calculated in S303 of the PAUSE command 240 per unit time, with the preset threshold (S304).

If the number of issuance times calculated in S303 of the PAUSE command 240 per unit time is not more than the threshold, the process returns to S301. Then, next-cycle data acquisition from collected information is conducted.

If the number of issuance times exceeds the threshold, the microburst detection part 102 determines that microburst has occurred in the traffic to the corresponding equipment (S306).

Hence, the microburst detection part 102 notifies the alarm notification part 103 of the occurrence of microburst.

The alarm notification part 103 generates an alarm message alarming the occurrence of microburst, and outputs the generated alarm message to an apparatus such as a PC (Personal Computer) located outside the microburst detection device 100 (S307).

As described, in this embodiment, the number of times the PAUSE command has been issued due to an excess of packets is acquired and evaluated.

Therefore, microburst, being an abrupt excess of packets that cannot be detected by an evaluation on average basis of the number of packets that have been transmitted, can be detected.

According to this embodiment, the collected information indicating the number of issuance times of the PAUSE command is acquired from the database, and the number of issuance times of the PAUSE command indicated by the acquired collected information is evaluated, thereby detecting the occurrence of microburst.

Therefore, microburst can be detected using conventional network monitoring such as SNMP, so that probes for capturing the packets need not be employed.

So far this embodiment has described a microburst detection device that collects by SNMP, the number of issuance times of the PAUSE command in queue control of equipments constituting the network, and detects the occurrence of microburst from the difference between the numbers of issuance times of the PAUSE command of different times.

### Embodiment 2.

In Embodiment 1 described above, the number of issuance times of the PAUSE command is evaluated. Embodiment 2 indicates a configuration in which microburst is detected in cases where flow rate is not controlled using the PAUSE command.

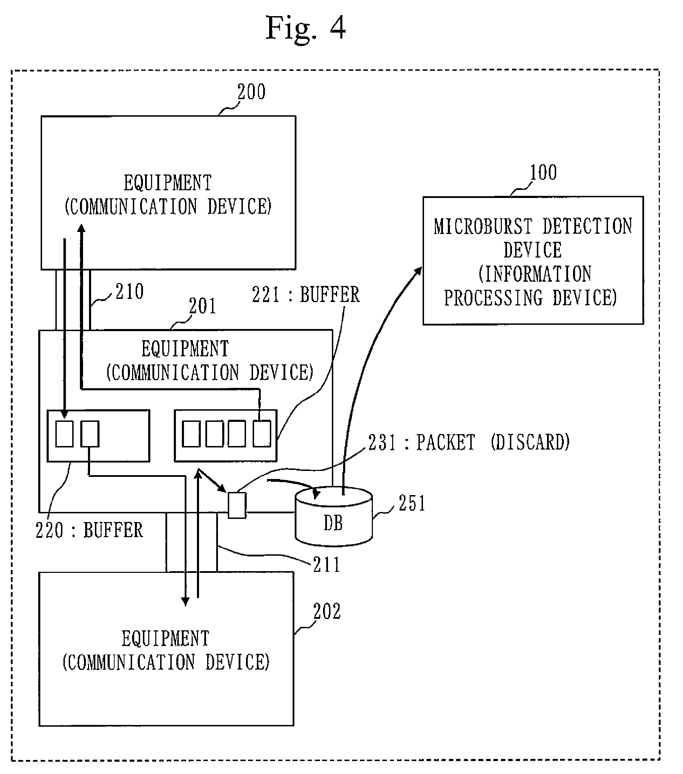

Fig. 4 illustrates a system configuration according to this embodiment.

In this embodiment, when there is no free space in the buffer, each equipment discards a packet that cannot be stored in the buffer, as a packet 231 is discarded.

A database 251 records the number of such discarded packets of each equipment.

A microburst detection device 100 receives from the database 251 collected information indicating the number of discarded packets of each equipment and analyzes the number of discarded packets indicated by the collected information, thereby determining whether or not microburst has occurred in the traffic to each equipment.

The microburst detection device 100 according to this embodiment also has the internal structure illustrated in Fig. 2.

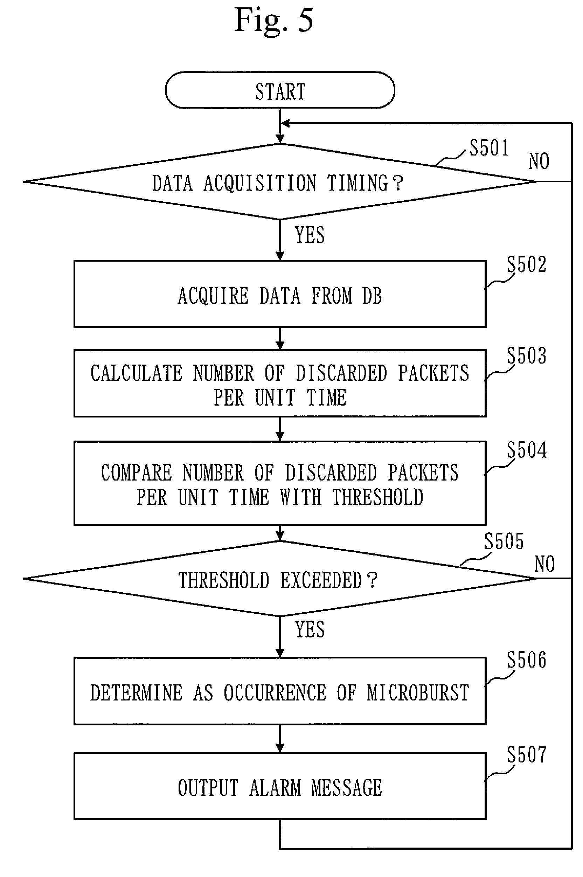

The operation according to this embodiment will be described with reference to the flowchart of Fig. 5.

At the time a packet has been transmitted from equipment 202 to equipment 201, if a buffer 221 of the equipment 201 has no free space, the packet 231 transmitted by the equipment 202 is discarded.

In this case, this discard is recorded in the database 251 as the number of discards.

A data acquisition part 101 of the microburst detection device 100 regularly acquires the collected information of the database 250 which indicates the number of discarded packets (S501, S502).

This acquisition is done by GET of SNMP or the like.

Then, a microburst detection part 102 calculates (S503) the number of discarded packets per unit time from the collected information acquired in S502.

More specifically, the microburst detection part 102 divides, by an elapsed time, the difference between the value of the number of discarded packets acquired this time and the value of the number of discarded packets acquired in the last cycle, thereby obtaining the number of discarded packets per unit time.

The elapsed time (the cycle of the data acquisition timing in S501) may be 10 seconds, 30 seconds, 1 minute, 5 minutes, or the like.

The unit time may be 1 second, 1 millisecond, or the like.

Then, the microburst detection part 102 compares the number of discarded packets per unit time calculated in S503, with a preset threshold (S504).

If the number of discarded packets per unit time calculated in S503 is not more than the threshold, the process returns to S501. Then, next-cycle data acquisition from collected information is conducted.

If the number of discarded packets exceeds the threshold, the microburst detection part 102 determines that microburst has occurred in the traffic to the corresponding equipment (S506).

Hence, the microburst detection part 102 notifies an alarm notification part 103 of the occurrence of microburst.

The alarm notification part 103 generates an alarm message alarming the occurrence of microburst, and outputs the generated alarm message to an apparatus such as a PC located outside the microburst detection device 100 (S507).

As described above, in this embodiment, the determination is made by evaluating the number of discarded packets. Therefore, an occurrence of microburst in equipment that is not under flow rate control can also be detected.

So far this embodiment has described a microburst detection device that collects by SNMP, the numbers of packet loss times of the equipments constituting the network, and detects the occurrence of microburst from the difference between the numbers of packet loss times of different times.

### Embodiment 3.

This embodiment explains a configuration that estimates a route along which microburst has occurred in cases where there are a plurality of equipments.

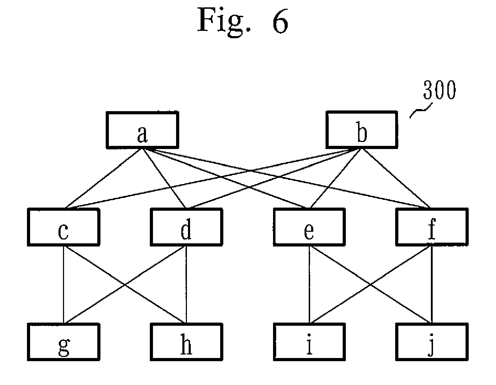

Fig. 6 illustrates a system configuration according to this embodiment.

Referring to Fig. 6, a network system 300 is a monitoring target network and is constituted by equipment a, equipment b, equipment c, equipment d, equipment e, equipment f, equipment g, equipment h, equipment i, and equipment j.

In Fig. 6, each of the equipment a and equipment b is connected to the equipment c, equipment d, equipment e, and equipment f.

Furthermore, each of the equipment c and equipment d is connected to the equipment a and equipment b, and the equipment g and equipment h.

Each of the equipment e and equipment f is connected to the equipment a and equipment b, and the equipment i and equipment j.

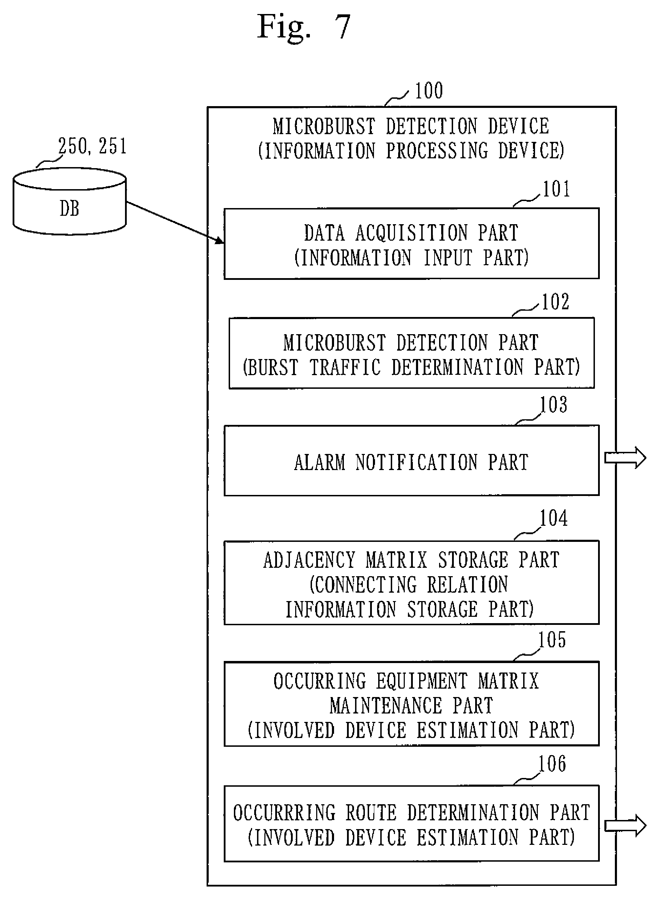

Fig. 7 illustrates a configuration example of a microburst detection device 100 according to this embodiment.

When compared with the configuration of Fig. 2, the configuration of Fig. 7 additionally includes an adjacency matrix storage part 104, an occurring equipment matrix maintenance part 105, and an occurring route determination part 106.

Except for the adjacency matrix storage part 104, occurring equipment matrix maintenance part 105, and occurring route determination part 106, the components are the same as their counterparts described in Embodiment 1, and their explanation will accordingly be omitted.

The adjacency matrix storage part 104 stores an adjacency matrix.

The adjacency matrix is a matrix representing the connecting relations among the plurality of equipments of the network system 300.

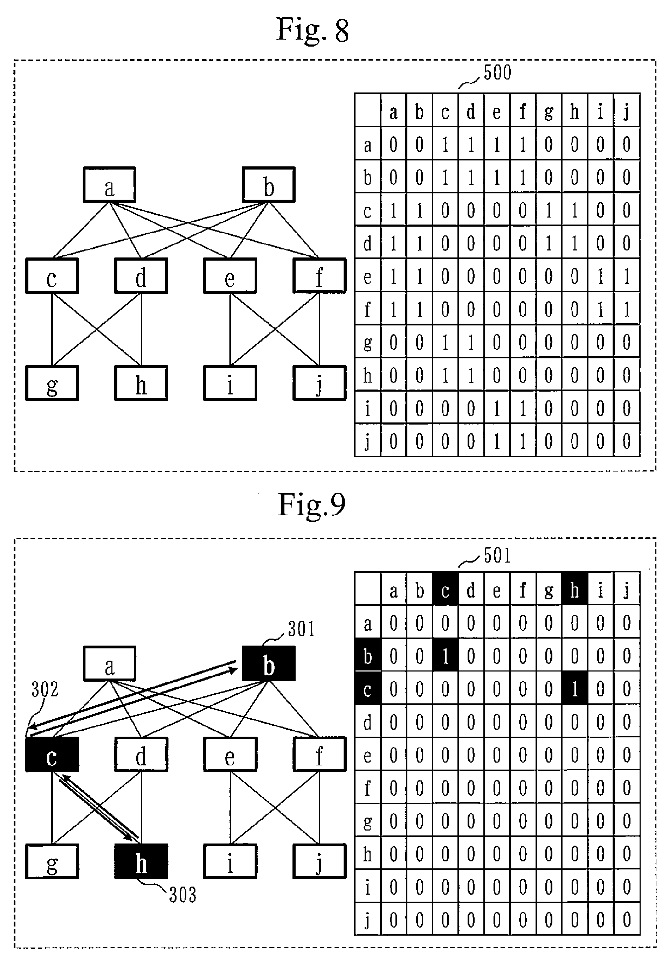

More specifically, concerning the configuration of the network system 300 of Fig. 6, the adjacency matrix storage part 104 stores an adjacency matrix 500 illustrated in Fig. 8.

In the adjacency matrix 500, "1" is set between two equipments connected to each other, and "0" is set between two equipments not connected to each other.

The adjacency matrix storage part 104 is an example of a connecting relation information storage part.

When microburst has occurred, the occurring equipment matrix maintenance part 105 analyzes the adjacency matrix 500 to generate an occurring equipment matrix 501 of Fig. 9.

In the occurring equipment matrix 501, "1" is set between equipments estimated to be involved in the occurrence of microburst.

In the example of Fig. 9, the equipment b (301), the equipment c (302), and the equipment h (303) are the equipments estimated to be involved in the occurrence of microburst.

The occurring route determination part 106 analyzes the occurring equipment matrix 501 to determine the occurring route of the microburst.

Note that the occurring equipment matrix maintenance part 105 and the occurring route determination part 106 are examples of an involved device estimation part.

The operation according to this embodiment will be described.

It is supposed that as an excessive number of packets are transmitted from the equipment h (303), microburst occurs, namely the loads to the equipment c (302) and equipment b (301) via which the packets from the equipment h (303) are transmitted are high.

At this time, the equipment c (302) transmits the PAUSE command to the equipment h (303), and the equipment b (301) transmits the PAUSE command to the equipment c (302). Alternatively, packet discard occurs in the equipment c (302) and equipment b (301).

In a microburst detection device 100, a data acquisition part 101 acquires the number of issuance times of the PAUSE command or the number of discarded packets, in the same manner as in Embodiment 1 and Embodiment 2.

A microburst detection part 102 determines whether or not microburst has occurred. If it is determined that microburst has occurred, an alarm notification part 103 notifies the occurring equipment matrix maintenance part 105 of the occurrence of microburst.

The occurring equipment matrix maintenance part 105 analyzes the adjacency matrix 500 so as to detect equipment that has issued the PAUSE command or has discarded a packet, and equipment that is connected to this equipment, and generates the occurring equipment matrix 501.

Microburst has occurred on the route between the equipment b (301) and equipment c (302). Microburst has occurred also on the route between the equipment c (302) and equipment h (303).

The occurring route determination part 106 traces the occurring equipment matrix 501 to acquire the status of the route of equipment b - equipment c and the route of equipment c - equipment h. Thus, the occurring route determination part 106 can estimate that microburst has occurred on the route of equipment b - equipment c-equipment h.

The occurring route determination part 106 outputs information indicating the estimated route to an external PC or the like.

So far this embodiment has described a microburst detection device that specifies microburst occurring equipment by collating the PAUSE command detection result or packet discard detection result with the configuration information and, if microburst is detected in a plurality of equipments, specifies the route along which the microburst has occurred.

### Embodiment 4.

In Embodiment 3, the issuing destination of the PAUSE command or the transmission source of the discarded packet can be specified from the occurring route of the microburst. Embodiment 4 will describe a method for estimating a microburst occurring route for cases where the microburst occurring route cannot be specified.

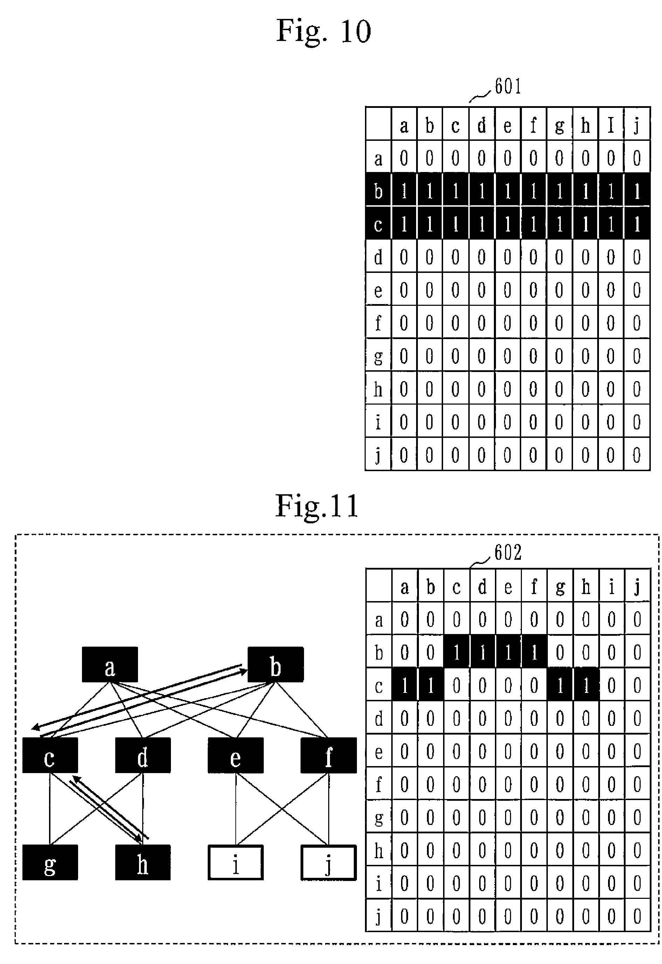

An occurring equipment matrix 601 of Fig. 10 is a matrix generated by an occurring equipment matrix maintenance part 105 according to this embodiment.

An occurring route estimation matrix 602 of Fig. 11 is a matrix generated by an occurring route determination part 106 according to this embodiment and related to equipments estimated to be involved in the microburst.

In this embodiment as well, a microburst detection device 100 has the same configuration as that illustrated in Fig. 7.

An operation according to this embodiment will be described.

The occurring equipment matrix maintenance part 105 according to this embodiment can specify equipment that has transmitted the PAUSE command or equipment where packet discard has occurred, but cannot specify a microburst occurring route.

Therefore, the occurring equipment matrix maintenance part 105 generates the occurring equipment matrix 601 which is a matrix on equipments that have transmitted the PAUSE command or equipments that have discarded a packet.

According to this embodiment, equipment b (301) and equipment c (302) issue the PAUSE command or discard a packet, in the same manner as in Embodiment 3.

Hence, in the example of Fig. 10, the rows for the equipment b (301) and equipment c (302) are entirely formed of "1".

Then, the occurring route determination part 106 receives the logical sum of the occurring equipment matrix 601 and an adjacency matrix 500.

The result obtained from the logical sum is the occurring route estimation matrix 602.

The occurring route determination part 106 extracts, as routes where microburst has possibly occurred, equipment b - equipment c, equipment b - equipment d, equipment b - equipment e, equipment b - equipment f, equipment c - equipment a, equipment c - equipment b, equipment c - equipment g, and equipment c - equipment h, in accordance with the occurring route estimation matrix 602.

Thus, even in cases where the microburst occurring route per individual equipment cannot be specified, equipment concerning the occurrence of microburst can be extracted.

So far this embodiment has described a microburst detection device that specifies microburst occurring equipment by collating the PAUSE command detection result or packet discard detection result with the configuration information and, if microburst is detected in a plurality of equipments, estimates the route along which the microburst has occurred.

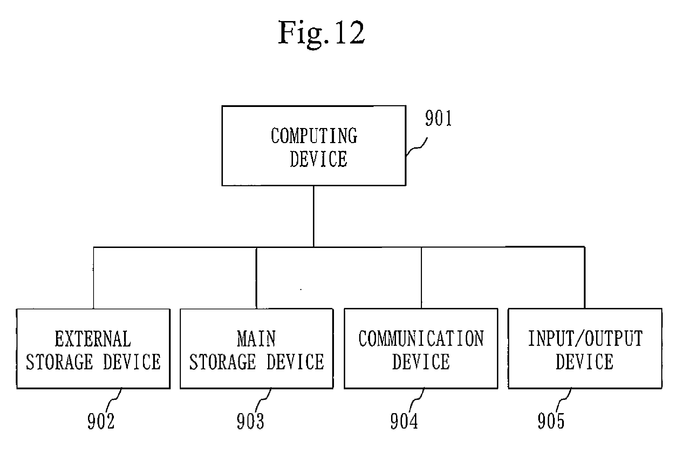

Finally, a hardware configuration example of the microburst detection device 100 according to Embodiments 1 to 4 will be described with reference to Fig. 12.

The microburst detection device 100 is a computer and can implement the elements of the microburst detection device 100 using programs.

According to the hardware configuration of the microburst detection device 100, a computing device 901, an external storage device 902, a main storage device 903, a communication device 904, and an input/output device 905 are connected to a bus.

The computing device 901 is a CPU (Central Processing Unit) which executes the programs.

The external storage device 902 is, for example, a ROM (Read Only Memory), a flash memory, or a hard disk device.

The adjacency matrix storage part 104 is implemented by, for example, the external storage device 902.

The main storage device 903 is a RAM (Random Access Memory).

The data acquisition part 101 acquires the collected information from the database 250 or database 251, using the communication device 904.

The input/output device 905 is, for example, a mouse, a keyboard, or a display device.

The programs are usually stored in the external storage device 902. The programs as loaded in the main storage device 903 are sequentially read and executed by the computing device 901.

The programs are those which implement functions each explained as "part" (the adjacency matrix storage part 104 excluded; the same applies hereinafter) illustrated in Fig. 1.

Furthermore, the external storage device 902 also stores an operating system (OS). At least part of the OS is loaded in the main storage device 903. The computing device 901, while executing the OS, executes the programs each of which implements the function of "part" illustrated in Fig. 1.

The information, data, signal values, and variable values representing the results of the processes described in the explanations of Embodiments 1 to 4 as "to judge", "to determine", "to acquire", "to detect", "to extract", "to sense", "to compare", "to set", "to register", "to select", "to generate", "to calculate", "to input, "to output", and the like are stored, in the form of files, in the main storage device 903.

An encryption key and a decryption key, random values, and parameters may be stored, in the form of files, in the main storage device 903.

The configuration of Fig. 12 merely presents an example of the hardware configuration of the microburst detection device 100. The hardware configuration of the microburst detection device 100 is not limited to the configuration illustrated in Fig. 12, but can be another configuration.

The information processing method according to the present invention can be implemented by the procedure described in Embodiments 1 to 4.

### Reference Signs List

100: microburst detection device; 101: data acquisition part; 102: microburst detection part; 103: alarm notification part; 104: adjacency matrix storage part; 105: occurring equipment matrix maintenance part; 106: occurring route determination part; 200: equipment; 201: equipment; 202: equipment; 210: cable; 211: cable; 220: buffer; 221: buffer; 230: packet; 231: packet; 240: PAUSE command; 250: database; 251: database; 300: network system; 500: adjacency matrix; 501: occurring equipment matrix; 601: occurring equipment matrix; 602: occurring route estimation matrix

## Claims

1. An information processing device comprising:
an information input part that receives collected information collected from a communication device having a buffer and for accumulating in the buffer a packet received, the collected information indicating at least either one of the number of times of packet transmission halt request and the number of discarded packets, the number of times of packet transmission halt request being the number of times the communication device has requested a packet transmission source to halt packet transmission due to a shortage of a free space of the buffer, the number of discarded packets being the number of packets discarded by the communication device due to a shortage of the free space of the buffer; and
a burst traffic determination part that determines whether or not burst traffic to the communication device has occurred, based on at least either one of the number of times of packet transmission halt request and the number of discarded packets, each of which numbers being indicated by the collected information.

2. The information processing device according to claim 1, wherein
when the information input part receives the collected information indicating the number of times of packet transmission halt request within a predetermined time of the communication device, the burst traffic determination part calculates the number of times of packet transmission halt request per unit time from the number of times of packet transmission halt request within the predetermined time indicated by the collected information, and compares the number of times of packet transmission halt request per unit time calculated, with a predetermined threshold; and if the number of times of packet transmission halt request per unit time exceeds the threshold, determines that burst traffic to the communication device has occurred, and
when the information input part receives the collected information indicating the number of discarded packets within a predetermined time of the communication device, the burst traffic determination part calculates the number of discarded packets per unit time from the number of discarded packets within the predetermined time indicated by the collected information, and compares the number of discarded packets per unit time calculated, with a predetermined threshold; and if the number of discarded packets per unit time exceeds the threshold, determines that burst traffic to the communication device has occurred.

3. The information processing device according to claim 1 or 2, further comprising
an alarm notification part that, when the burst traffic determination part determines that burst traffic to the communication device has occurred, outputs an alarm message alarming that burst traffic to the communication device has occurred.

4. The information processing device according to any one of claims 1 to 3,
wherein the information input part receives collected information collected from each of a plurality of communication devices included in a predetermined network, and
wherein the burst traffic determination part determines whether or not burst traffic has occurred to each of the communication devices, using the collected information from each of the communication devices.

5. The information processing device according to claim 4, further comprising:
a connecting relation information storage part that stores connecting relation information representing a connecting relation among the plurality of communication devices; and
an involved device estimation part that, when the burst traffic determination part determines that burst traffic to any one of the communication devices has occurred, analyzes the connecting relation information and estimates a communication device that is involved in occurrence of the burst traffic.

6. The information processing device according to claim 5,
wherein the connecting relation information storage part stores an adjacency matrix representing the connecting relation among the plurality of communication devices, as the connecting relation information, and
wherein the involved device estimation part, when the burst traffic determination part determines that burst traffic to any one of the communication devices has occurred, analyzes the adjacency matrix and estimates a communication device that is involved in occurrence of the burst traffic.

7. An information processing method comprising:
receiving by a computer, collected information collected from a communication device having a buffer and for accumulating in the buffer a packet received, the collected information indicating at least either one of the number of times of packet transmission halt request and the number of discarded packets, the number of times of packet transmission halt request being the number of times the communication device has requested a packet transmission source to halt packet transmission due to a shortage of a free space of the buffer, the number of discarded packets being the number of packets discarded by the communication device due to a shortage of the free space of the buffer; and
determining by the computer, whether or not burst traffic to the communication device has occurred, based on at least either one of the number of times of packet transmission halt request and the number of discarded packets, each of which numbers being indicated by the collected information.

8. A program that causes a computer to execute:
an information input process of receiving collected information collected from a communication device having a buffer and for accumulating in the buffer a packet received, the collected information indicating at least either one of the number of times of packet transmission halt request and the number of discarded packets, the number of times of packet transmission halt request being the number of times the communication device has requested a packet transmission source to halt packet transmission due to a shortage of a free space of the buffer, the number of discarded packets being the number of packets discarded by the communication device due to a shortage of the free space of the buffer; and
a burst traffic determining process of determining whether or not burst traffic to the communication device has occurred, based on at least either one of the number of times of packet transmission halt request and the number of discarded packets, each of which numbers being indicated by the collected information.
